# EUROPÄISCHE PATENTSCHRIFT

(11) **EP 1 206 183 B1**
(45) Veröffentlichungstag und Bekanntmachung des Hinweises auf die Patenterteilung: **17.05.2006**
(21) Anmeldenummer: 00960536.1
(22) Anmeldetag: 28.08.2000
(51) Int. Cl.: A01N 31/04, A01N 31/02

(54) **IMPRÄGNIERUNGSVERFAHREN**
IMPREGNATION METHOD
PROCEDE D'IMPREGNATION

(30) Priorität: 27.08.1999 DE 19940605
(43) Veröffentlichungstag der Anmeldung: 22.05.2002
(73) Patentinhaber: Schür, Jörg, 41844 Wegberg-Dalheim (DE)
(72) Erfinder: Schür, Jörg, 41844 Wegberg-Dalheim (DE)
(74) Vertreter: Helbing, Jörg
(86) Internationale Anmeldenummer: PCT/EP2000/008381
(87) Internationale Veröffentlichungsnummer: WO 2001/015528

(56) Entgegenhaltungen:
- EP-A- 0 103 878
- WO-A-00/03612
- WO-A-96/29895
- WO-A-98/54971
- WO-A-98/58540
- FR-A- 2 228 434
- GB-A- 1 060 447
- US-A- 4 446 161
- US-A- 5 814 325
- DATABASE WPI Section Ch, Week 198946 Derwent Publications Ltd., London, GB; Class C03, AN 1989-337764 XP002156082 & SE 8 900 902 A (THORSELL W), 13. Mai 1989 (1989-05-13)
- DATABASE WPI Section Ch, Week 198728 Derwent Publications Ltd., London, GB; Class D13, AN 1987-196269 XP002156083 & JP 62 126931 A (MORINAGA MILK CO LTD), 9. Juni 1987 (1987-06-09)
- DATABASE WPI Section Ch, Week 199049 Derwent Publications Ltd., London, GB; Class C03, AN 1990-361964 XP002156084 & CA 2 012 288 A (STERLING DRUG INC), 16. September 1990 (1990-09-16)

## Beschreibung

Die vorliegende Erfindung betrifft ein Verfahren zur Imprägnierung, Einarbeitung oder Oberflächenbehandlung von mikrobiell abbaubaren, kontaminierbaren und/oder verderblichen, umfassend das Auftragen einer speziellen antimikrobiellen Zusammensetzung auf die Substanzen/Gegenstände oder das Einarbeiten der antimikrobiellen Zusammensetzung in die Substanzen, die Verwendung dieser speziellen antimikrobiellen Zusammensetzungen zur Imprägnierung bzw. Oberflächenbehandlung von mikrobiologisch abbaubaren, kontaminierbaren und/oder verderblichen Substanzen sowie deren Verwendung in Substanzen und Produkten, die selbstkontaminierend sein müssen.

Die Imprägnierung und Oberflächenbehandlung von mikrobiologisch und parasitär empfindlichen, d.h. kontaminierbaren, abbaubaren und/oder verderblichen Substanzen und Gegenständen ist ein grundsätzliches Problem bei der industriellen Verarbeitung solcher Substanzen und Gegenstände (wie z. B. Holz und Holzprodukte, Textilien und textile Rohstoffe, verkeimungsgefährdete Kunststoffe, Dämm- und Dichtungsstoffe). Ebenso ist die Selbstdekontamination von Reinigungsmitteln oder Körperpflegemitteln z. B. Deodorantien mit harmlosen Stoffen noch ausgesprochen problematisch.

Zum heutigen Zeitpunkt wird ein mikrobiologischer oder parasitärer Befall ausschließlich "toxisch" bekämpft, d. h. mit bakteriziden, fungiziden, viruziden, sporiziden, insektiziden Substanzen, die jedoch zum Großteil stark toxisch sind, so daß die Personen, die mit diesen so behandelten Produkten in Verbindung kommen, gefährdet sind. Darüber hinaus bestehen auch Probleme bei der Entsorgung von mit solchen toxischen Substanzen bearbeiteten Produkten, Substanzen und Gegenständen.

Antimikrobielle Zusammensetzungen, die einen oder mehrere GRAS (Generally Recognized As Safe)-Aromastoffe enthalten, sind vielfach beschrieben worden. So offenbart WO 98/58540 GRAS-Aromastoffe enthaltende Additive zur Haltbarkeitsverbesserung und Stabilisierung verschiedener Nahrungsmittel sowie zum Dekontaminieren und Reinigen von Nahrungsmitteln, Rohstoffen, Kosmetika, Pharmazeutika, Farben, Papier, Zellstoff, Vieh, Geflügel, Fisch und Abfällen. Aus der WO 96/29895 lässt sich ein Verfahren zur Haltbarkeitsverbesserung und/oder Stabilisierung von mikrobiell verderblichen Produkten entnehmen, wobei GRAS-Aromastoff enthaltende Prozesshilfsmittel für die Produktion in Nahrungs- und Futtermitteln, Kosmetika, Pharmazeutika, Farben, Papier und/oder Zellstoffen verwendet werden. Aus der WO 00/03612 sind GRAS-Aromastoffhaltige Additive zur Haltbarkeitsverbesserung und/oder Stabilisierung von mikrobiell verderblichen Produkten, wie Nahrungs- und Futtermittel, Pharmazeutika und Kosmetika sowie als Prozesshilfsmittel für die Produktion in Nahrungs- und Futtermitteln, Kosmetika, Pharmazeutika, Farben, Papier und/oder Zellstoffen entnehmbar.

Die SE 8900902 offenbart die Verwendung von Zimtaldehyd alleine oder Zusammen mit Terpen-Verbindungen als Insektenabwehrmittel zum Gegenstand.

Die JP 62126931 hat die Sterilisierung von frischem Gemüse anhaftenden E. coli-Bakterien durch Benetzung mit einer wässrigen Lösung einer organischen Säure und/oder einem Calciumsalz zum Gegenstand.

Die CA 2012288 betrifft ein Pflanzendesinfektionsmittel bestehend aus einer Mischung welche unter anderem Thymol, Eugenol oder Carvacrol als eine Komponente sowie Benzylalkohol und/oder Zimtalkohol als weitere Komponente enthalten kann.

In der GB 1060447 ist eine Zusammensetzung zur Haltbarmachung von Kosmetika offenbart, welche bestimmte etherische Öle, Essigsäure oder Zitronensäure und Ethylalkohol oder iso-Propylalkohol enthält.

Die Aufgabe der vorliegenden Erfindung beruht darin, ein Imprägnierungs- oder Oberflächenbehandlungsverfahren zur Verfügung zu stellen, daß die Nachteile des Standes der Technik nicht aufweist.

Überraschenderweise wurde nun gefunden, daß spezielle antimikrobielle Zusammensetzungen, die als antimikrobielle Bestandteile zwei oder mehrere GRAS (Generally Recognized As Safe)-Aromastoffe enthalten (wie sie z.B. aus der WO-96/29895 und 98/58540 als Prozesshilfsmittel und Additive für Nahrungsmittel bekannt sind), auch sehr gute fungizide und antiparasitäre Eigenschaften aufweisen. Darauf aufbauend wurde gefunden, dass diese Zusammensetzungen sehr gut zur Imprägnierung und Oberflächenbehandlung von mikrobiell abbaubaren, kontaminierbaren und/oder verderblichen Substanzen/Gegenstände bzw. zur Einarbeitung in diese Substanzen/Gegenstände geeignet sind, ohne dabei das Toxizitätsproblem der herkömmlichen Imprägnierungs-, Oberflächenbehandlungs- oder Einarbeitungsmittel zu besitzen. Durch die Einarbeitung kann ein dekontaminierender Effekt des Produktes (falls vorhanden) verstärkt werden und somit bisher hierfür verwendete toxische Substanzen ersetzt werden. Insbesondere wurde gefunden, daß die benzylalkoholhaltigen Zusammensetzungen eine besonders hohe antimikrobielle und antiparasitäre Aktivität besitzen.

Gegenstand der vorliegenden Anmeldung ist demgemäß
(1) ein Verfahren zur Imprägnierung und zur Behandlung mikrobiell abbaubarer, kontaminierbarer und/oder verderblicher Substanzen/Gegenstände, wobei die Substanzen/Gegenstände ausgewählt sind aus Holz, Korbwaren, Textilien und textile Rohstoffe, Filter, Waschmittel und Reinigungsmittel, umfassend
   - das Verteilen oder Auftragen einer antimikrobiellen Zusammensetzung auf der Oberfläche der abbaubaren, kontaminierbaren und/oder verderblichen vorgenannten Substanzen/Gegenstände und/oder
   - das Einarbeiten der antimikrobiellen Zusammensetzung in die abbaubaren, kontaminierbaren und/oder verderblichen Substanzen/Gegenstände,
   wobei die antimikrobielle Zusammensetzung wenigstens zwei GRAS(Generally Recognized As Safe)-Aromastoffe enthält;
(2) eine bevorzugte Ausführungsform des in (1) definierten Verfahrens, wobei die antimikrobielle Zusammensetzung eine oder mehrere GRAS(Generally Recognized As Safe)-Aroma-Alkohole oder deren Derivate (a) und einen oder mehrere Aromastoffe, ausgewählt aus Polyphenolverbindungen (b) und GRAS-Aromasäuren oder deren Derivate (c), enthält;
(3) eine weitere bevorzugte Ausführungsform des in (1) definierten Verfahrens, wobei die antimikrobielle Zusammensetzung
   (i) wenigstens einen lipophilen GRAS(Generally Recognized As Safe)-Aromastoff und
   (ii) wenigstens einen hydrophilen GRAS-Aromastoff enthält;
(4) eine bevorzugte Ausführungsform des in (1) bis (3) definierten Verfahrens, wobei die antimikrobielle Zusammensetzung den GRAS-Aroma-Alkohol Benzylalkohol als notwendigen Bestandteil enthält;
(5) die Verwendung der in (1) bis (4) definierten Zusammensetzung zur Imprägnierung oder Oberflächenbehandlung von mikrobiell abbaubaren, kontaminierbaren und/oder verderblichen Substanzen/Gegenstände oder von Substanzen/Gegenstände, die selbstdekontaminierend sein müssen; wobei die Substanzen/Gegenstände wie in (1) definiert sind, und
(6) die Verwendung einer antimikrobiellen Zusammensetzung, wie in (1) bis (4) definiert, zur Einarbeitung in mikrobiologisch abbaubare, kontaminierbare und/oder verderbliche Substanzen/Gegenstände, oder in Substanzen/Gegenstände, die selbstdekontaminierend sein müssen, wobei die Substanzen/Gegenstände wie in (1) definiert sind.

Unter "mikrobiell abbaubaren, kontaminierbaren und/oder verderblichen Substanzen/Gegenstände " im Sinne der vorliegenden Erfindung sind die folgenden natürlichen und/oder chemischen Materialien zu verstehen:
- Holz und Korbwaren,
- Textilien und textile Rohstoffe,
- Filter,
- Waschmittel und Reinigungsmittel.

Unter "Imprägnieren, Einarbeiten oder Oberflächenbehandeln" wird dabei im Falle des Holzes sowohl ein Besprühen direkt nach dem Fällen der Bäume, ein Besprühen beim Zerkleinern (Sägen und Hobeln) durch kontinuierliche Zugabe zu der Zerkleinerungsvorrichtung, eine Behandlung des zerkleinerten Materials, z.B. während des Transportes, eine Druckimprägnierung des verarbeiteten Produktes als auch die langfristige Pflege durch Auftragen von Ölen und Anstrichen verstanden. Bei Zellstoffen und Papier bedeutet Imprägnieren die Behandlung des Produktes während der Verarbeitung, z.B. durch Zugabe bei der Herstellung dieser Produkte als auch eine anfängliche Oberflächenbehandlung bei oder während der Installation der Geräte. Darüber hinaus kann z.B. bei Luftfilter auch durch eine spätere Oberflächenbehandlung die Standzeit weiter verlängert werden. Coatings von natürlichen und/oder chemischen Materialien können entweder durch Zugabe des Imprägnierungsmittels bei dem Herstellungsverfahren oder durch spätere Oberflächenbehandlung imprägniert werden. Darüber hinaus kann Imprägnieren im Sinne der vorliegenden Erfindung ebenfalls die Zugabe der antimikrobiellen Zusammensetzung zu Farben und Lacken bedeuten. Eine Oberflächenentkeimung oder Imprägnierung findet insbesondere durch Sprühen, Tauchen, Vernebeln, Abwaschen und Wischen statt. Dies kann mit oder ohne Druck, bei Raumtemperatur oder heiß erfolgen.

Im folgenden werden die erfindungsgemäß einsetzbaren Stoffe im einzelnen näher beschrieben:

Die vorstehend in (1) bis (4) genannten GRAS-Aromastoffe, GRAS-Aroma-Alkohole und GRAS-Aromasäuren sind von der FDA-Behörde zur Verwendung in Nahrungsmitteln als gewerbesicher anerkannt (GRAS = Generally Recognized As Safe In Food). Bei den erwähnten GRAS-Aromastoffen handelt es sich um solche Verbindungen, die in FEMA/FDA GRAS Flavour Substances Lists GRAS 3-15 Nr. 2001-3815 (Stand 1997) genannt sind. In dieser Liste sind natürliche und naturidentische Aromastoffe aufgeführt, die von der amerikanischen Gesundheitsbehörde FDA zur Verwendung in Nahrungsmitteln zugelassen sind: FDA Regutation 21 CFR 172.515 für naturidentische Aromastoffe (Synthetic Flavoring Substances and Adjuvants) und FDA Regulation 21 CFR 182.20 für natürliche Aromastoffe (Natural Flavoring Substances and Adjuvants). Geeignete GRAS-Aromastoffe gemäß der vorliegenden Erfindung sind z. B. (a) GRAS-Aroma-Alkohole oder deren Derivate, (b) Polyphenolverbindungen, (c) GRAS-Aromasäuren oder deren Derivate, (d) Phenole oder deren Derivate, (e) Ester, (f) Terpene, (g) Acetale, (h) Aldehyde und (i) etherische Öle.

Im einzelnen können beispielsweise folgende GRAS-Aroma-Alkohole (a) zum Einsatz kommen:
Benzylalkohol, Acetoin (Acetylmethylcarbinol), Ethylalkohol (Ethanol), Propylalkohol (1-Propanol), iso-Propylalkohol (2-Propanol, Isopropanol), Propylenglykol, Glycerin, n-Butylalkohol (n-Propylcarbinol), iso-Butylalkohol (2-Methyl-1-propanol), Hexylalkohol (Hexanol), L-Menthol, Octylalkohol (n-Octanol), Zimtalkohol (3-Phenyl-2-propen-1-ol), α-Methylbenzylalkohol (1-Phenylethanol), Heptylalkohol (Heptanol), n-Amylalkohol (1-Pentanol), iso-Amylalkohol (3-Methyl-1-butanol), Anisalkohol (4-Methoxybenylalkohol, p-Anisalkohol), Citronellol, n-Decylalkohol (n-Decanol), Geraniol, β-γ-Hexanol (3-Hexenol), Laurylalkohol (Dodecanol), Linalool, Nerolidol, Nonadienol (2,6-Nonadien-1-ol), Nonylalkohol (Nonanol-1), Rhodinol, Terpineol, Borneol, Clineol (Eucalyptol), Anisol, Cuminylalkohol (Cuminol), 10-Undecen-1-ol, 1-Hexadecanol. Als Derivate können sowohl natürliche oder naturidentische Derivate als auch synthetische Derivate eingesetzt werden. Geeignete Derivate sind z. B. die Ester, Ether und Carbonate der vorstehend genannten GRAS-Aroma-Alkohole. Besonders bevorzugte GRAS-Aroma-Alkohole sind die aromatischen GRAS-Aroma-Alkohole der vorstehenden Liste (hiervon besonders bevorzugt ist Benzylalkohol), 1-Propanol, Glycerin, Propylenglycol, n-Butylalkohol, Citronellol, Hexanol, Linalool, Acetoin und deren Derivate.

Als Komponente (b) können die folgenden Polyphenole eingesetzt werden:
Brenzcatechin, Resorcin, Hydrochinon, Phloroglucin, Pyrogallol, Resveratrol, Usninsäure, Acylpolyphenole, Lignine, Anthocyane, Flavone, Catechine, Gallussäurederivate (z. B. Tannine, Gallotannin, Gerbsäuren, Gallus-Gerbsäuren), Carnosol, Camosolsäure (einschließlich deren Derivate wie (2,5-Dihydroxyphenyl)carboxyl- und (2,5-Dihydroxyphenyl)alkylencarboxylsubstitutionen, Salze, Ester, Amide), Kaffesäure und deren Ester und Amide, Flavonoide (z. B. Flavon, Flavonol, Isoflavon, Gossypetin, Myrecetin, Robinetin, Apigenin, Morin, Taxifolin, Eriodictyol, Naringin, Rutin, Hesperidin, Troxerutin, Chrysin, Tangeritin, Luteolin, Catechine, Quercetin, Fisetin, Kaempferol, Galangin, Rotenoide, Aurone, Flavonole, Diole), Extrakte aus z. B. Camellia Primula. Weiterhin können auch deren mögliche Derivate, z. B. Salze, Säuren, Ester, Oxide und Ether verwendet werden. Das besonders bevorzugte Polyphenol ist Tannin (eine GRAS-Verbindung).

Als Komponente (c) können beispielsweise folgende GRAS-Säuren zum Einsatz kommen:
Essigsäure, Aconitsäure, Adipinsäure, Ameisensäure, Apfelsäure (1-Hydroxybernsteinsäure), Capronsäure, Hydrozimtsäure (3-Phenyl-1-propionsäure), Pelargonsäure (Nonansäure), Milchsäure (2-Hydroxypropionsäure), Phenoxyessigsäure (Glykolsäurephenylether), Phenylessigsäure (α-Toluolsäure), Valeriansäure (Pentansäure), iso-Valeriansäure (3-Methylbutansäure), Zimtsäure (3-Phenylpropensäure), Citronensäure, Mandelsäure (Hydroxyphenylessigsäure), Weinsäure (2,3-Di hydroxybutandisäure; 2,3-Dihydroxybernsteinsäure), Fumarsäure, Tanninsäure und deren Derivate.

Geeignete Derivate der GRAS-Aromasäuren im Sinne der vorliegenden Erfindung sind Ester (z. B. C₁₋₆-Alkylester und Benzylester), Amide (einschließlich N-substituierte Amide) und Salze (Alkali-, Erdalkali- und Ammoniumsalze der vorstehend genannten Säuren zu verstehen. Ebenfalls umfassen Derivate im Sinne der vorliegenden Erfindung Modifikationen der Seitenketten-Hydroxyfunktionen (z. B. Acyl- und Alkylderivate) und Modifikationen der Doppelbindungen (z. B. die perhydrierten und hydroxilierten Derivate der genannten Säuren).

Als Komponente (d) können folgende Phenolverbindungen zum Einsatz kommen:
Thymol, Methyleugenol, Acetyleugenol, Safrol, Eugenol, Isoeugenol, Anethol, Phenol, Methylchavicol (Estragol; 3-4-Methoxyphenyl-1-propen), Carvacrol, α-Bisabolol, Fornesol, Anisol (Methoxybenzol) und Propenylguaethol (5-Prophenyl-2-ethoxaphenol) und deren Derivate. Derivate im Sinne der vorliegenden Erfindung sind Verbindungen, in denen die phenolische Hydroxylgruppe verestert oder verethert ist.

Als GRAS-Ester (Komponente (e)) kommen beispielsweise Allicin und die folgenden Acetate Iso-Amylacetat (3-Methyl-1-butylacetat), Benzylacetat, Benzylphenylacetat, n-Butylacetat, Cinnamylacetat (3-Phenylpropenylacetat), Citronellylacetat, Ethylacetat (Essigester), Eugenolacetat (Acetyleugenol), Geranylacetat, Hexylacetat (Hexanylethanoat), Hydrocinnamylacetat (3-Phenyl-propylacetet), Linalylacetat, Octylacetat, Phenylethylacetat, Terpinylacetat, Triacetin (Glyceryltriacetat), Kaliumacetat, Natriumacetat und Calciumacetat zum Einsatz. Weitere geeignete Ester sind die Esterderivate der vorstehend definierten Säuren (Komponente (c)).

Als Terpene (Komponente (f)) kommen z. B. Campher, Limonen und β-Caryophyllen in Betracht.

Zu den verwendbaren Acetalen (Komponente (g)) zählen z. B. Acetal, Acetaldehyddibutylacetal, Acetaldehyddipropylacetal, Acetaldehydphenethylpropylacetal, Zimtaldehydethylenglycolacetal, Decanaldimethylacetal, Heptanaldimethylacetal, Heptanalglycerylacetal und Benzaldehydpropylenglykolacetal.

Als Aldehyde (Komponente (h)) sind z. B. Acetylaldehyd, Anisaldehyd, Benzaldehyd, iso-Butylaldehyd (Methyl-1-propanal), Citral, Citronellal, n-Caprinaldehyd (n-Decanal), Ethylvanillin, Fufurol, Heliotropin (Piperonal), Heptylaldehyd (Heptanal), Hexylaldehyd (Hexanal), 2-Hexenal (β-Propylacrolein), Hydrozimtaldehyd (3-Phenyl-1-propanal), Laurylaldehyd (Docdecanal), Nonylaldehyd (n-Nonanal), Octylaldehyd (n-Octanal), Phenylacetaldehyd (1-Oxo-2-phenylethan), Propionaldehyd (Propanal), Vanillin, Zimtaldehyd (3-Phenylpropenal), Perillaaldehyd und Cuminaldehyd verwendbar.

Erfindungsgemäß einsetzbar sind beispielsweise auch die im folgenden aufgeführten etherischen Öle und/oder die alkoholischen, glykolischen oder durch CO₂-Hochdruckverfahren erhaltenen Extrakte aus den genannten Pflanzen (Komponente (i)):
(i1) Öle bzw. Extrakte mit hohem Anteil an Alkoholen: Melisse, Koriander, Kardamon, Eukalyptus;
(i2) Öle bzw. Extrakte mit hohem Anteil an Aldehyden: Eukalyptus citriodora, Zimt, Zitrone, Lemongras, Melisse, Citronella, Limette, Orange;
(i3) Öle bzw. Extrakte mit hohem Anteil an Phenolen: Oreganum, Thymian, Rosmarin, Orange, Nelke, Fenchel, Campher, Mandarine, Anis, Cascarille, Estragon und Piment;
(i4) Öle bzw. Extrakte mit hohem Anteil an Acetaten: Lavendel;
(i5) Öle bzw. Extrakte mit hohem Anteil an Estern: Senf, Zwiebel, Knoblauch;
(i6) Öle bzw. Extrakte mit hohem Anteil an Terpenen: Pfeffer, Pomeranze, Kümmel, Dill, Zitrone, Pfefferminz, Muskatnuß.

Eine bevorzugte Ausführungsform der antimikrobiellen Zusammensetzung (1) enthält wenigstens einen GRAS-Aroma-Alkohol (a), insbesondere Benzylalkohol. Dabei sind solche Zusammensetzungen bevorzugt, die weniger als 50 Gew.-%, vorzugsweise weniger als 30 Gew.-%, besonders bevorzugt weniger als 20 Gew.-%, Ethanol, Isopropanol oder Benzylalkohol oder eines Gemisches dieser Stoffe enthalten.

In einer anderen bevorzugten Ausführungsform der vorliegenden Erfindung enthält die antimikrobielle Zusammensetzung wenigstens einen hydrophilen, alkoholischen GRAS-Aromastoff und/oder einen hydrophilen, nichtalkoholischen GRAS-Aromastoff. Der Anteil der hydrophilen, alkoholischen GRAS-Aromastoffe darf bis zu 99 Gew.-% der Zusammensetzung betragen und beträgt vorzugsweise 30 bis 98 Gew.-%, besonders bevorzugt 80 bis 95 Gew.-%. Der Anteil der hydrophilen, nichtalkoholischen GRAS-Aromastoffe in der insektiziden Zusammensetzung darf bis zu 90 Gew.-% betragen und beträgt vorzugsweise 0,1 bis 50 Gew.-%. Dabei sind solche Zusammensetzungen bevorzugt, die neben den genannten hydropilen Verbindungen weiterhin Benzylalkohol und/oder eine Polyphenolverbindung (b1) enthalten.

Hydrophile, alkoholische GRAS-Aromastoffe sind dabei einwertige oder mehrwertige Alkohole mit 2 - 10 C-Atomen, vorzugsweise mit 2 - 7 C-Atomen. Besonders bevorzugte Verbindungen sind 1-Propanol, Glycerin, Propylenglykol und Acetoin. Hydrophile, nichtalkoholische GRAS-Aromastoffe sind ausgewählt aus organischen Säuren mit 1 - 15 C-Atomen und physiologisch akzeptablen Salzen derselben, hydrophilen Acetaten und hydrophilen Aldehyden. Bevorzugte organische Säuren sind solche mit 2 - 10 C-Atomen und insbesondere Essigsäure, Acronitsäure, Ameisensäure, Apfelsäure, Milchsäure, Phenylessigsäure, Zitronensäure, Mandelsäure, Weinsäure, Fumarsäure, Tanninsäure, Hydrozimtsäure und deren physiologisch akzeptablen Salze. Das hydrophile Acetat ist vorzugsweise ausgewählt aus Allicin, Triacetin, Kaliumacetat, Natriumacetat und Calciumacetat und der hydrophile Aldehyd ist vorzugsweise ausgewählt aus Furfurol, Propionaldehyd und Vanillin.

Eine weitere bevorzugte antimikrobielle Zusammensetzung ist die vorstehend unter (2) angeführte Zusammensetzung. Die Zusammensetzung kann dabei 0,1 bis 99,9 Gew.-%, vorzugsweise 0,5 bis 99 Gew.-%, Komponente (a), 0 bis 25 Gew.-%, vorzugsweise 0,01 bis 10 Gew.-%, Komponente (b) und 0 bis 70 Gew.-%, vorzugsweise 0,01 bis 30 Gew.-%, Komponente (c) enthalten.

Die Komponente (a) enthält in dieser Ausführungsform der Erfindung einen oder mehrere GRAS-Aroma-Alkohole. Bevorzugt ist der Einsatz von zwei oder drei GRAS-Aroma-Alkoholen. Das Mischungsverhältnis der Komponente (a) zu Komponenten (b) liegt vorzugsweise zwischen 10.000 : 1 und 1 : 10.000, besonders bevorzugt zwischen 1000 : 1 und 1:1000 und ganz besonders bevorzugt zwischen 100 : 1 und 1 : 100.

In einer besonders bevorzugten Ausführungsform des erfindungsgemäßen Verfahrens enthält die antimikrobielle Zusammensetzung
(a1) Benzylalkohol als notwendigen Bestandteil und gegebenenfalls
(a2) einen oder mehrere weitere GRAS-Aroma-Alkohole oder deren Derivate und
(b) eine oder mehrere Polyphenolverbindungen und/oder
(c) eine oder mehrere GRAS-Säuren oder deren Derivate.

Geeignete Mengen der Komponenten (a1), (a2), (b) und (c) sind dabei:
0,1 bis 99 Gew.-%, vorzugsweise 0,1 bis 75 Gew.-% Benzylakohol;
0.01 bis 99,8 Gew.-%, vorzugsweise 0,01 bis 99 Gew.-% Komponente (a2);
0.01 bis 25 Gew.-%, vorzugsweise 0,01 bis 10 Gew.-% Komponente (b) und/oder
0.01 bis 70 Gew.-%, vorzugsweise 0,01 bis 30 Gew.-% Komponente (c).

Besonders bevorzugt in diesen Zusammensetzungen sind solche die zwingend eine Polyphenolverbindung (b) enthalten und optional noch eine oder mehrere GRAS-Säuren (c).
Die besonders bevorzugte antimikrobielle Zusammensetzung kann weiterhin noch die bereits erwähnten GRAS-Aromastoffe (d) bis (i) enthalten.

Der Anteil der Komponenten (d) - (i) in der antimikrobiellen Zusammensetzung ist vorzugsweise kleiner oder gleich 25 Gew.-% und liegt bevorzugt im Bereich von 0,001 bis 9 Gew.-%. Bevorzugt unter den weiteren GRAS-Aromastoffen sind die Phenole (d) und etherische Öle (i).

In der in Ausführungsform (3) des erfindungsgemäßen Verfahrens eingesetzten Zusammensetzung sind die lipophilen GRAS-Aromastoffe vorzugsweise ausgewählt aus (aₗ) lipophilen GRAS-Aroma-Alkoholen oder deren Derivate, (b) Polyphenolverbindungen, (cₗ) lipophilen GRAS-Aromasäuren oder deren Derivate, (d) Phenolen oder deren Derivate, (eₗ) lipophilen Estern, (f) Terpenen, (g) Acetalen, (hₗ) lipophilen Aldehyden und (i) etherischen Ölen. Die antimikrobielle Zusammensetzung enthält vorzugsweise zwei der genannten GRAS-Aromastoffe.

Geeignete lipophile GRAS-Aroma-Alkohole (aₗ) aus den vorstehend definierten Alkoholen (a) sind dabei insbesondere:
aromatische GRAS-Aroma-Alkohole, umfassend Benzylalkohol, 2-Phenylethanol, 1-Phenylethanol, Zimtalkohol, Hydrozimtalkohol, 1-Phenyl-1-Propanol und Anisalkohol und aliphatischen GRAS-Aroma-Alkoholen, umfassend n-Butylalkohol, iso-Butylalkohol, Hexylalkohol, L-Menthol, Octylalkohol, Heptylalkohol, n-Amylalkohol, iso-Amylalkohol, Anisalkohol, Citronellol, n-Decylalkohol, Geraniol, β-γ-Hexanol, Laurylalkohol, Linalool, Nerolidol, Nonadienol, Nonylalkohol, Rhodinol, Terpineol, Borneol, Clineol, Anisol, Cuminylalkohol, 10-Undecen-1-ol und 1-Hexadecanol und deren Derivate. Hierbei sind die aromatischen GRAS-Aroma-Alkohole uns insbesondere Benzylalkohol bevorzugt.

Im Sinne der vorliegenden Erfindung ist der hydrophile GRAS-Aromastoff ein hydrophiler, alkoholischer GRAS-Aromastoff (aₕ) oder ein hydrophiler, nichtalkoholischer GRAS-Aromastoff, wobei der hydrophile, alkoholische GRAS-Aromastoff (aₕ) ist - wie bereits vorstehend erwähnt - vorzugsweise ein einwertiger oder mehrwertiger Alkohol mit 2 bis 10, besonders bevorzugt mit 2 bis 7 C-Atomen ist, der insbesondere ausgewählt ist aus Acetoin, Ethylalkohol, Propylalkohol, iso-Propylalkohol, Propylenglykol und Glycerin. Der hydrophile, nichtalkoholische GRAS-Aromastoff ist vorzugsweise eine hydrophile organische GRAS-Aromasäure (cₕ) mit 1 bis 15 C-Atomen oder ein physiologisches Salz derselben, ein hydrophiles Acetat (eₕ) oder ein hydrophiler Aldehyd (hₕ). Bevorzugte hydrophile organische Säuren (cₕ) sind dabei solche, die 2 bis 10 C-Atome aufweisen und insbesondere Essigsäure, Aconitsäure, Ameisensäure, Apfelsäure, Milchsäure, Phenylessigsäure, Citronensäure, Mandelsäure, Weinsäure, Fumarsäure, Tanninsäure, Hydrozimtsäure und deren physiologischen Salze. Das hydrophile Acetat (eₕ) ist vorzugsweise Allicin, Triacetin, Kaliumacetat, Natriumacetat und Calciumacetat. Der hydrophile Aldehyd (hₕ) ist vorzugsweise aus Furfurol, Propionaldehyd und Vanillin.

Die lipophile Polyphenolverbindung (b), Phenole oder deren Derivate (d), Terpene (f), Acetale (g) und etherischen Öle (i) in der Zusammensetzung des Verfahrens (3) sind dabei bevorzugt die vorstehend definierten Verbindungen (b), (d), (f), (g) und (i). Die lipophilen GRAS-Aromasäuren oder deren Derivate (q), lipophilen Ester (eₗ) und lipophilen Aldehyde umfassen alle spezifisch genannten Säuren, Ester und Aldehyde mit Ausnahme der vorstehend spezifisch genannten Verbindungen (cₕ), (eₕ) und (hₕ).

In bevorzugter Ausführungsform des Verfahrens (3) enthält die antimikrobielle Zusammensetzung entweder
(i) zwei lipophile GRAS-Aroma-Alkohole (aₗ), jedoch kein Benzylalkohol und keine Polyphenolverbindungen (b) oder
(ii) Benzylalkohol und/oder eine Polyphenolverbindung (b), jedoch keine weiteren GRAS-Aroma-Alkohole.

Hierbei ist besonders bevorzugt, wenn die antimikrobielle Zusammensetzung ausschließlich nichtalkoholische, hydrophile GRAS-Aromastoffe, insbesondere ausschließlich eine hydrophile GRAS-Aromasäure (cₕ) enthält und wenn die antimikrobielle Zusammensetzung 0,01 bis 99 Gew.-%, vorzugsweise 0,1 bis 90 Gew.-% Benzylalkohol oder Polyphenolverbindungen (b) und 0,01 bis 50 Gew.-%, vorzugsweise 0,1 bis 30 Gew.-% hydrophile, nicht-alkoholische GRAS-Aromastoffe enthält.

In einer weiteren bevorzugten Ausführungsform des Verfahrens (1) enthält die antimikrobielle Zusammensetzung
(A) einen oder mehrere GRAS-Aroma-Alkohole (a) oder deren Derivate und
(B) einen oder mehrere Aromastoffe, ausgewählt aus Polyphenolverbindungen (b) und lipophile GRAS-Aromasäuren oder deren Derivate (c).
Bevorzugt ist dabei, wenn die Zusammensetzung 0,1 bis 99 Gew.-%, vorzugsweise 0,5 bis 99 Gew.-%, Komponente (a), 0 bis 25 Gew.-%, vorzugsweise 0,01 bis 10 Gew.-%, Komponente (b) und 0 bis 70 Gew.-%, vorzugsweise 0,01 bis 30 Gew.-%, Komponente (c) enthält.

Daneben kann die antimikrobielle Zusammensetzung weitere GRAS-Aromastoffe, ausgewählt aus (d) Phenolen oder deren Derivate, (eₗ) lipophilen Estern, (f) Terpenen, (g) Acetalen, (hₗ) lipophilen Aldehyden und (i) etherischen Ölen enthalten.

Weiterhin ist bevorzugt, wenn die Komponente (A) der antimikrobiellen Zusammensetzung Benzylalkohol als notwendigen Bestandteil (a1) und gegebenenfalls einen oder mehrere weitere lipophile GRAS-Aroma-Alkohole oder deren Derivate (aₗ) enthält. Vorzugsweise enthält diese antimikrobielle Zusammensetzung
0,1 bis 99 Gew.-%, vorzugsweise 0,1 bis 75 Gew.-% Benzylalkohol;
0 bis 99,8 Gew.-%, vorzugsweise 0,01 bis 99 Gew.-% Komponente (aₗ); und
0 bis 25 Gew.-%, vorzugsweise 0,01 bis 10 Gew.-% Komponente (b),
0 bis 70 Gew.-%, vorzugsweise 0,01 bis 30 Gew.-% Komponente (c).

Die hierbei eingesetzte Zusammensetzung kann weitere lipophile GRAS-Aromastoffe (d) - (i), wie vorstehend definiert, enthalten, vorzugsweise 0,001 bis 25 Gew.-%, besonders bevorzugt 0,01 bis 9 Gew.-%, der weiteren GRAS-Aromastoffe (d) - (i). Diese weiteren lipophilen GRAS-Aromastoffe sind besonder bevorzugt Phenole (d) und/oder etherische Öle (i).

In einer weiteren besonders bevorzugten Ausführungsform des Verfahrens (3) besteht die Komponente (A) der antimikrobiellen Zusammensetzung aus zwei lipophilen GRAS-Aroma-Alkoholen und die Komponente (B) enthält wenigstens eine Polyphenolverbindung (b). Hierbei ist die Polyphenolverbindung (b) bevorzugt Tannin, wobei eine Zusammensetzung, die 20 -98 Gew.-% Benzylalkohol und 0,01 - 10 Gew.-% Tannin enthält, besonders bevorzugt ist.

Besonders bevorzugt im Sinne der vorliegenden Erfindung sind antimikrobielle Zusammensetzungen, deren antimikrobiell wirksamer Bestandteil ausschließlich aus GRAS-Aromastoffen besteht, d. h. keine "Derivate" der GRAS-Aromastoffe enthält. Als Beispiel einer solchen Zusammensetzung ist ein Gemisch aus Benzylalkohol, einem oder zwei der vorstehend genannten GRAS-Aroma-Alkohole (a2) und Tannin zu nennen. Dieses Gemisch enthält dabei vorzugsweise 0.1 bis 98 Gew.-% Benzylalkohol und 0.01 - 10 Gew.-%, vorzugsweise 1 - 10 Gew.-%, Tannin. Ein weiteres Beispiel einer bevorzugten Zusammensetzung ist ein Gemisch aus 2 Alkoholen, einem Polyphenol (insbesondere Tannin) und einem etherischen Öl (insbesondere einem phenolischen etherischen Öl, Komponente (i3)).

Neben den Komponenten (a) bis (i) können zusätzlich noch weitere Verbindungen (j) wie Alkohole (j1) Emulgatoren (j2), Stabilisatoren (j3), Antioxidantien (j4), Konservierungsmittel (j5), Lösemittel (j6), Trägerstoffe (j7) etc. eingesetzt werden.

Der Anteil der Komponenten (j) an der antimikrobiellen Zusammensetzung darf bis 95 Gew.-% betragen, ist vorzugsweise kleiner als 10 Gew.-% und liegt bevorzugt im Bereich von 0,1 bis 5 Gew.-%.

Bei den Alkoholen (j1) handelt es sich erfindungsgemäß um einwertige oder mehrwertige Alkohole mit 2 bis 10 C-Atomen, vorzugsweise mit 2 bis 7 C-Atomen, wobei die GRAS-Alkohole (a) hiervon nicht umfaßt sind. Vorzugsweise werden solche Mengen an GRAS-Aroma-Alkoholen (a) und weiteren Alkoholen (j1) eingesetzt, daß deren Mischungsverhältnis zwischen 1000 : 1 und 1 : 1000, insbesondere zwischen 100 : 1 und 1 : 100 und besonders bevorzugt zwischen 10 : 1 und 1 : 10 liegt.

Besonders bevorzugt in dem erfindungsgemäßen Verfahren ist die Verwendung von Systemen, die ausschließlich aus GRAS-Aromastoffen bestehen, insbesondere dann, wenn die behandelten Produkte mit Nahrungsmitteln in Verbindung kommen, da hierdurch auch die Gefahr der Kontamination der Nahrungsmittel durch Nicht-GRAS-Verbindungen unterbunden wird. Weiterhin sollte darauf geachtete werden, daß die antimikrobielle Zusammensetzung frei von bedenklichen Dosierungen von Ethanol und Isopropanol ist, da diese Stoffe von den Personen, die die Imprägnierung vornehmen, eingeatmet werden können. Darüber hinaus kann bei der Verwendung dieser Verbindungen Explosionsgefahr bestehen.

Durch das erfindungsgemäße Verfahren kann ein wirksamer Schutz gegen die nachfolgend beschriebenen Mikroorganismen bzw. Parasiten erfolgen:
Schimmelpilze: Mehltauarten, Rostpilze, Blattfleckenpilze, Fusarium-Arten, Aspergillus-Arten, Penicillium-Arten, Rhizoctonia, Peronaspora, Phytophtora, Botrytis cinerea, Rhizoctonia solani, Aspergillus Ocraceus, Aspergillus Niger, Clavosporium Fusarium, Penicillium.
Parasiten: Lepidopteren (Chilo suppressalis, Chaphalocrosis medinalis, Ostrina nubilalis), Myzus persicae, (springende) Insekten, Tabakkäfer, Milben, Blattläuse, Fliegen, Motten.
Viren: Tomatenmosaikvirus, X-Virus, Y-Virus, Rice Stripe Virus, TYM-Virus, Rizomania, BNYVV.

Spezielle Pilze/Parasiten, die mit dem erfindungsgemäßen Verfahren unterdrückt werden können sind in der folgenden Tabelle zusammengefaßt:

| Name | Frühere und deutsche Namen | Bedeutung |
|---|---|---|
| *Amylostereum areolatum* | *Stereum areolatum* | Rostreifigkeit |
| | Braunfilziger Schichtpilz | |
| *Antrodia vallantii* | *Poria vaillanti* | Häufigster Porenhausschwamm |
| | Breitsporiger weißer Porenschwamm | |
| | | Parasit |
| *Antrodia vallantii* | *Poria vaillanti* | Häufigster Porenhausschwamm |
| | Breitsporiger weißer Porenschwamm | |
| *Armillaria mellea* | Honiggelber Hallimasch | Parasit |
| *Aspergillus niger* | Schwarzer Gießkannenschimmel | "Schwarzschimmel" |
| *Aspergillus flavus* | | Aflatoxine |
| *Aureobasidium pullulans* | *Pullularia pullulans* | Anstrichbläue |
| *Bispora antenna* | *Bispora monilioides* | Schwarzstreifigkeit |
| *Ceratocystis fagacearum* | | Eichenwelke |
| *Ceratocystis fimbriata f. platani* | | Platanenwelke |
| *Chaetomium globosum* | | Moderfäule, Prüfpilz |
| *Chlorociboria aeruginascens* | *Chlorosplenium aeruginascens* | "Grünfäule" |
| | Kleinsporiger Grünspanbecherling | |
| *Cladosporium* spp. | | Schnittholzbläue |
| *Coniophora puteana* | *Coniophora cerebella* | Prüfpilz EN 113 |
| | Kellerschwamm | |
| *Daedalea quercina* | *Lenzites quercina* | Eichenkernholzabbau |
| | Eichenwirrling | |
| *Discula pinicola phonectria parasitica* | *Endothia parasitica* | Kastanienrindenkrebs |
| *Fomes fomentarius* | *Polyporus fomentarius* | Parasit |
| *Gloeophyllum abietinum* | *Lenzites abietina* | Fensterholzzerstörer |
| | Tannenblättling | |
| *Gloephyllum sepiarium* | *Lenzites sepiaria* | |
| | Zaunblättling | |
| *Gloephyllum trabeum* | *Lenzites trabea* | Prüfpilz EN 113 |
| | Balkenblättling | |
| *Heterobasidion annosum* | *Fomes annosus* | Rotfäule |
| | Wurzelschwamm | |
| *Laetiporus sulphureus* | *Polyporus sulphureus* | Parasit |
| | Schwefelporling | |
| *Lentinus lepideus* | Schuppiger Sägeblättling | Teerölresistenz, EN 113 |
| *Meripilus giganteus* | Riesenporling | Parasit Straßenbäume |
| *Nectaria coccinea* | | Buchenrindennekrose |
| *Ophiostoma minus* | *Ceratocystis minor* | Stammholzbläue |
| *Ophiostoma piceae* | *Ceratocystis piceae* | Stammholzbläue |
| *Ophiostoma ulmi* | *Ceratocystis ulmi* | |
| *Paxillus panuoides* | Muschelkrempling | Ulmensterben |
| *Paecilomyces variotii* | | Grubenholzzerstörer |
| *Penicillium* spp. | Pinselschimmel | Moderfäule |
| *Phaeolus spadiceus* | *Phaeolus schweinitzii* | |
| | Kiefernbraunporling | Parasit |
| *Phanerochaete chrysosporium* | amorph: | |
| | *Sporotrichum pulverulentum* | Ligninabbau |
| | Goldsporiger Cystidenrindenpilz | |
| *Phellinus igniarius* | *Fomes igniarius* | |
| | Grauer Feuerschwamm | Parasit |
| *Phellinus pini* | *Trametes pini* | |
| | Kiefernfeuerschwamm | Parasit |
| *Phlebiopsis gigantea* | *Phanerochaete gigantea* | |
| | Großer Rindenpilz | Biologischer Forstschutz |
| *Piptoporus betulinus* | *Polyporus betulinus* | |
| | Birkenporling | Parasit |
| *Polyporus squamosus* | Schuppiger Porling | |
| *Schizophyllum commune* | Gemeiner Spaltblättling | Parasit |
| *Serpula lacrymans* | *Merulius lacrymans* | "Genetik Holzpilze" |
| | Echter Hausschwamm | |
| *Serpula himantioides* | *Merulius silvester* | |
| | Wilder Hausschwamm | |
| *Sparassis crispa* | Krause Glucke | |
| *Stereum sanguinolentum* | Blutender Schichtpilz | Parasit |
| | | Wundfäule, Roststreifig- |
| *Trametes versicolor* | *Coriolus versicolor* | keit |
| | Schmetterlingsporling | Simultanfäule |
| *Trichaptum abietinum* | *Hirschioporus abietinus* | Prüfpilz EN 113 |
| | Tannentramete | Roststreifigkeit |
| *Trichoderma viride* | Grüner Holzschimmel | |
| *Tyromyces placenta* | *Postia, Oligoporus placenta* | Cellulasen |
| | Saftporling | Prüfpilz EN 113 |
| *Xylobolus frustulatus* | *Stereum frustulosum* | |
| | Mosaikschichtpilz | "Rebhuhnfäule" |

| Kultur/Objekt | Schadenorganismus/Zweck |
|---|---|
| Nadelholz/Laubholz | freifressende Schmetterlingsraupen |
| Laubholz | gemeiner Goldafter |
| Nadelholz/Laubholz | Schwammspinner |
| Nadelzolz/Laubholz | Nonne |
| Nadelholz | Kiefernspinnet |
| Nadelholz | rotköpfiger Tannenwickler |
| Nadelholz | großer brauner Rüsselkäfer |
| Nadelholz/Laubholz | holzbrütender Borkenkäfer |
| Nadelholz/Laubholz | rindenbrütender Borkenkäfer |
| Nadelholz | Apfelrostmilbe |

Die Zusammensetzung zur Imprägnierung gemäß der vorliegenden Erfindung kann neben der vorstehend definierten antimikrobiellen Zusammensetzung noch Farbmittel, wie Farbstoffe und Pigmente, Dispergiermittel, Lösemittel, Härter, natürliche Holzschutzbiozide enthalten. Solche natürlichen Holzschutzbiozide und deren bevorzugter maximaler Gehalt in den erfindungsgemäßen Zusammensetzungen sind in der nachfolgenden Tabelle gezeigt:

| Eingesetzte Biozide | max. Gehalt in % |
|---|---|
| Buchenholzteeröl | 29 |
| Eichenrinde | 1,0 |
| Fichtenholzdestillat | - |
| Galgantwurzel | 1,0 |
| Guajakholz | 1,0 |
| Holzessig | 10 |
| Nadelholzteer | 12,0 |
| Neemrinde | - |
| Nelkenöl | - |
| Oreganum | 1,0 |
| Wacholderholz | 1,0 |
| Wintergrünöl | |

Der Anteil der antimikrobiellen Zusammensetzung an der Zusammensetzung zur Imprägnierung, Oberflächenbehandlung oder Einarbeitung beträgt 0,001 bis 99 Gew.-%, vorzugsweise 0,1 bis 10 Gew.-%.

Ein antimikrobieller Effekt kann dann beobachtet werden, wenn der Gehalt der antimikrobiellen Zusammensetzung 0,001 bis 100 mg/g, vorzugsweise 0,1 bis 50 mg/g (bei der Einarbeitung oder Imprägnierung) bzw. 0,1 bis 50 g/m² (bei Oberflächenbehandlung) an behandeltem Substrat beträgt.

Mit der vorliegenden Erfindung wird somit ein für die Gesundheit unbedenkliches und umweltverträgliches Behandlungsverfahren bereitgestellt, das den jeweiligen mikrobiell abbaubaren, kontaminierten und/oder verderblichen Produkt angepaßt werden kann. Weitere bevorzugte antimikrobielle Zusammensetzungen sind in den WO 96/29895 und WO 98/58540 genannt.

Die vorliegende Erfindung wird anhand der nachfolgenden Beispiele näher erläutert.

### Beispiele

Die Produktschutzmittel (PSM) enthalten die folgenden Bestandteile (in Gew.-%):

**PSM I:**

| | |
|---|---|
| 10,0 % | Polyphenol (hier: Tannin) |
| 18,2 % | Benzylalkohol |
| 60,0 % | Propylenglykol |
| 8,0 % | Milchsäure |
| 3,8 % | etherisches Öl (hier: ein phenolhaltiges etherisches Öl) |

**PSM II:**

| | | |
|---|---|---|
| Benzylalkohol | 50 % | a1 |
| Zimtaldehyd | 50 % | g |

**PSM III**

| | | |
|---|---|---|
| Benzylalkohol | 50 % | a1 |
| Propylenglykol | 50 % | b1 |

**PSM IV:**

| | | |
|---|---|---|
| a) Benzylalkohol | 50 % | a1 |
| Polyphenol (Tannin) | 50 % | b1 |
| b) Benzylalkohol | 50 % | a1 |
| Polyphenol (Tannin) | 25 % | b1 |
| Milchsäure | 25 % | b2 |
| c) Benzylalkohol | 25 % | a1 |
| Propylenglykol | 50 % | a2 |
| Polyphenol (Tannin) | 25 % | b1 |
| d) Benzylalkohol | 25 % | a1 |
| Propylenglykol | 25 % | a2 |
| Polyphenol (Tannin) | 25 % | b1 |
| Milchsäure | 25 % | b2 |

**PSM V:**

| | | |
|---|---|---|
| a) Propylenglykol | 25 % | a2 |
| Glycerin | 25 % | a2 |
| Milchsäure | 25 % | b2 |
| Tannin | 25 % | b1 |
| b) Propylenglykol | 50 % | a2 |
| Glycerin | 25 % | b2 |
| Milchsäure | 25 % | b2 |
| c) Propylenglykol | 50 % | a2 |
| Glycerin | 25 % | b2 |
| Tannin | 25 % | b1 |

### Beispiel 1: Oberflächen-Selbstdekontamination

- Anwendung:: Behandlung von Arbeitsflächen, Transportbändern, etc.
- Lebensmittelprodukt:: z. B. Fleisch
- Problematik:: Keimanstieg durch anwachsende Biomasse
- Dosierung:: unverdünnt auf Flächen aufsprühen

### Durchführung (auf Edelstahl-Arbeitstisch)

1. Arbeistfläche reinigen und desinifizieren (mit Alkohol 70%)
2. PSM I aufsprühen und abziehen
3. mit Rohfleisch kontaminieren
4. PSM I aufsprühen und abziehen
5. Probenahme

Der Vorgang wird in fünf Intervallen durchgeführt, Abstand 15 min.
Bakteriologie: Folgende Keime/Keimgruppen werden nach amtlichen Untersuchungsverfahren nach § 35 LMBG insoliert bzw. differenziert: GKZ, Enterobacteriaceen, Lactobacillen.
Probenahme: zwischen den Behandlungsintervallen.

### Auswertung

- Prüfobjekt:: Oberfläche V₂A-Stahl, welche in regelmäßigen Abständen mit einem Nackenkotelett kontaminiert wurde
- Kontrolle: Vor Versuchsbeginn Reinigung des Tisches und Desinfektion mit 70 % Alkohol
V₂A-Stahlfläche wurde in 15-min-Intervallen mit einem Nackenkotelett zum Aufbau einer Biomasse gewischt. Ab dem 2. Intervall wurde das Fleisch mit Wasser besprüht.
- PSM:: Einsprühen der Testfläche nach Reinigung und Desinfektion mit PSM I und mittels Gummischaber abgezogen.
Nach Kontamination mit dem Nackenkotelett wurde mit PSM besprüht und abgezogen, anschließend die Probe gezogen.
Rekontamination und Abzug erfolgte sofort danach.
- Prüfmethode:: Eine Fläche von 100 cm² wurde mittels eines Abstriches erfaßt.
- Ergebnisse:: siehe Anlage
- Kommentar:: PSM I ist in Kontamination mit der Anwendungstechnik in der Lage die GKZ (Gesamtkoloniezahl) um 10⁵, Enterobacteriaceen um 10² und Lactobacillen um 10⁵ auf kontaminierten Flächen zu reduzieren, d. h., Reduktionsfaktor 5 GKZ und Lactobacillen.

**Untersuchungsergebnisse**

| | GKZ/Abstrich | Enterobacteriaceen/ Abstrich | Lactobacillen/ Abstrich |
|---|---|---|---|
| 1. Kontamination ohne Abziehen | 6,7 x 10⁴ | 20 | 6,6 x 10⁴ |
| 6. Kontamination nach Abziehen | 2,3 x 10³ | - | 2,3 x 10³ |
| Kontrolle ohne PSM I sofort | 3,9 x 10⁵ | 5,5 x 10² | 3,8 x 10⁵ |
| | 6,1 x 10³ | - | 5,3 x 10³ |
| nach 15 Minuten | 7,4 x 10³ | - | 4,3 x 10³ |
| | 1,43 x 10⁴ | - | 1,36 x 10⁴ |
| nach 30 Minuten | 3,2 x 10³ | - | 2,1 x 10³ |
| | 1,29 x 10⁴ | 10 | 1,09 x 10⁴ |
| nach 45 Minuten | 6,4 x 10³ | - | 3,8 x 10³ |
| | 8,1 x 10³ | - | 6,8 x 10³ |
| nach 60 Minuten | 7,8 x 10³ | - | 6,1 x 10³ |
| | 3,6 x 10⁴ | 50 | 3,6 x 10⁴ |
| nach 75 Minuten | 7,6 x 10³ | - | 7,4 x 10³ |
| | 1,93 x 10⁴ | - | 1,82 x 10⁴ |
| nach 90 Minuten | 5,8 x 10³ | - | 5,3 x 10³ |
| | 1,25 x 10⁴ | - | 1,14 x 10⁴ |
| Kontrolle mit PSM sofort | 10 | - | - |
| | - | - | - |
| nach 15 Minuten | - | - | - |
| | - | - | - |
| nach 30 Minuten | - | - | - |
| | - | - | - |
| nach 45 Minuten | - | - | - |
| | - | - | - |
| nach 60 Minuten | - | - | - |
| | - | - | - |
| nach 75 Minuten | - | - | - |
| | - | - | - |
| nach 90 Minuten | - | - | - |
| | - | - | - |

### Beispiel 2: Quantitativer Suspensionsversuch gemäß DVG-Richtlinien

**Produkt PSM I Wirkungsprüfung: Imprägnierung, Oberflächenbehandlung, Einarbeitung, Dekontamination, Selbstdekontamination z. B. Deo, Farben, Lacke, Schmiermittel, Waschmittel, Hygienemittel**

| Prüfstamm (KBE/ml | Konz. in Vol.- % | EWZ 60 min | Kontrolle | log RF |
|---|---|---|---|---|
| E. coli (1,1 · 10⁹) | 8 | 0 | 980.000 | |
| | | 0 | | |
| | | 0 | 980.000 | > 4,99 |
| | 10 | 0 | 980.000 | |
| | | 0 | | |
| | | 0 | 980.000 | > 4,99 |
| | 12 | 0 | 980.000 | |
| | | 0 | | |
| | | 0 | 980.000 | > 4,99 |
| Pa. fluorescens (1,7·10⁹) | 8 | 0 | 2.800.000 | |
| | | 0 | | |
| | | 0 | 2.800.000 | > 5,45 |
| | 10 | 0 | 2.800.000 | |
| | | 0 | | |
| | | 0 | 2.800.000 | > 5,45 |
| | 12 | 0 | 2.800.000 | |
| | | 0 | | |
| | | 0 | 2.800.000 | > 5,45 |
| Staph. aureus (2,9·10⁹) | 8 | 0 | 1.250.000 | |
| | | 0 | | |
| | | 0 | 1.250.000 | > 5,10 |
| | 10 | 0 | 1.250.000 | |
| | | 0 | | |
| | | 0 | 1.250.000 | > 5,10 |
| | 12 | 0 | 1.250.000 | |
| | | 0 | | |
| | | 0 | 1.250.000 | > 5,10 |
| Salm. enteritidis (1,7·10⁹) | 8 | 0 | 1.600.000 | |
| | | 0 | | |
| | | 0 | 1.600.000 | > 5,20 |
| | 10 | 0 | 1.600.000 | |
| | | 0 | | |
| | | 0 | 1.600.000 | > 5,20 |
| | 12 | 0 | 1.600.000 | |
| | | 0 | | |
| | | 0 | 1.600.000 | > 5,20 |
| List. monocytogenes (1,5 · 10⁹) | 8 | 0 | 2.050.000 | |
| | | 0 | | |
| | | 0 | 2.050.000 | > 5,31 |
| | 10 | 0 | 2.050.000 | |
| | | 0 | | |
| | | 0 | 2.050.000 | > 5,31 |
| | 12 | 0 | 2.050.000 | |
| | | 0 | | |
| | | 0 | 2.050.000 | > 5,31 |
| Lactob. brevis (9,3·10⁸) | 8 | 1,540 | 1.140.000 | |
| | | 1,760 | | |
| | | 1,650 | 1.140.000 | > 2,84 |
| | 10 | 0 | 1.140.000 | |
| | | 0 | | |
| | | 0 | 1.140.000 | > 5,06 |
| | 12 | 0 | 1.140.000 | |
| | | 0 | | |
| | | 0 | 1.140.000 | > 5,06 |
| Ent. serogenes (7,0 · 10⁷) | 8 | 0 | 26.500 | |
| | | 0 | | |
| | | 0 | 26.500 | > 3,42 |
| | 10 | 0 | 26.500 | |
| | | 0 | | |
| | | 0 | 26.500 | > 3,42 |
| | 12 | 0 | 26.500 | |
| | | 0 | | |
| | | 0 | 26.500 | > 3,42 |

### Beispiel 3: Produktschutz Holz mit aufgelegtem Käse (Provokationstest)

**Produkt PSM I - Oberflächenbehandlung und Imprägnierung von Holz**

| | Unbehandelt | Behandelt PSM I gesprüht (Konzentration) | Behandelt PSM I getränkt (Konzentration) | Start Schimmelwachst. zw. Käse/Brett | Start Schimmelwachst. nur Brett | Luftfeuchtigkeit/ Temperatur |
|---|---|---|---|---|---|---|
| Fichte Leimholz | X | | | 8. Tag nach Behandlung | 19. Tag nach Behandlung | 85 %/15 °C |
| Fichte Leimholz | | X (12,7 g/m²) | | - | - | 85 %/15 °C |
| Fichte Leimholz | | | X 60 g/m² | - | - | 85 %/15 °C |
| Fichte Vollholz | X | | | 11. Tag nach Behandlung | 20. Tag nach Behandlung | 85 %/15 °C |
| Fichte Vollholz | | X (18,5 g/m²) | | - | - | 85 %/15 °C |
| Fichte Vollholz | | | 185 g/m² | - | - | 85 %/15 °C |
| Bangkirei | X | | | 6. Tag nach Behandlung | 11. Tag nach Behandlung | 85 %/15 °C |
| Bangkirei* | | X (5,1 g/m²) | | - | | 85 %/15 °C |

| | | | | | | |
|---|---|---|---|---|---|---|
| * Tropenholz | | | | | | |

Alle mit PSM behandelten Bretter wiesen bis zum 35. Tag nach Behandlung kein Schimmelwachstum auf. Danach wurde der Versuch abgebrochen (Ende der Käsereifung).

### Beispiel 4A: Produktschutz Holz mit aufgelegtem Käse (Provokationstest)

**Produkt PSM II und III - Oberflächenbehandlung von Holz in Abhängigkeit der PSM-II- und -III-Konzentration**

| | Unbehandelt | Behandelt Schimmelpilzwachstum PSM II | | Behandelt Schimmelpilzwachstum PSM III | | Luftfeuchtigkeit/ Temperatur |
|---|---|---|---|---|---|---|
| | | 100 | 50 | 100 | 50 | |
| Fichte Leimholz | X⁸ | - | X¹¹ | - | X¹² | 85 %/15 °C |
| Fichte Vollholz | X¹¹ | - | X¹³ | - | X¹⁸ | 85 %/15 °C |
| Bangkirei | X¹¹ | - | X¹⁵ | - | X¹⁴ | 85 %/15 °C |

| | | | | | | |
|---|---|---|---|---|---|---|
| * Tropenholz | | | | | | |
| X: Schimmelpilzwachstum positiv (Index gibt an, an welchem Tag Schimmelwachstum zwischen Käse und Brett auftrat); | | | | | | |
| -: Schimmelpilzwachstum negativ, bis zum 35. Tag nach Behandlung trat kein Schimmelwachstum auf. Danach wurde der Versuch abgebrochen (Ende der Käsereifung). | | | | | | |

### Dosierung PSM:

- Fichte Leimholz: 100: 15 g/m² PSM II oder III //50: 7,5 g/m² PSM II oder III
- Fichte Vollholz: 100: 20 g/m² PSM II oder III //50: 10 g/m² PSM II oder III
- Bangkirei: 100: 5 g/m² PSM II oder III //50: 2,5 g/m² PSM II oder III

### Beispiel 4B: Produktschutz Holz mit aufgelegtem Käse (Provokationstest)

**Produkt PSM IV - Oberflächenbehandlung von Holz**

| | Unbehandelt | Behandelt Schimmelpilzwachstum | | | | | | | | Luftfeuchtigkeit/ Temperatur |
|---|---|---|---|---|---|---|---|---|---|---|
| | | PSM IV a 100 | a 50 | b 100 | b50 | c 100 | c 50 | d 100 | d50 | |
| Fichte Leimholz | X⁸ | - | - | - | - | - | - | - | - | 85 %/15 °C |
| Fichte Vollholz | X¹¹ | - | - | - | - | - | - | - | - | 85 %/15 °C |
| Bangkirei | X¹¹ | - | - | - | - | - | - | - | - | 85 %/15 °C |

| | | | | | | | | | | |
|---|---|---|---|---|---|---|---|---|---|---|
| * Tropenholz | | | | | | | | | | |
| X: Schimmelpilzwachstum positiv (Index gibt an, an welchem Tag Schimmelwachstum zwischen Käse und Brett auftrat); | | | | | | | | | | |
| -: Schimmelpilzwachstum negativ, bis zum 35. Tag nach Behandlung trat kein Schimmelwachstum auf. Danach wurde der Versuch abgebrochen (Ende der Käsereifung). | | | | | | | | | | |

### Dosierung PSM IV:

- Fichte Leimholz:: 100: 15 g/m² IVa, b, c oder d//50: 7,5 g/m² IVa, b, c oder d
- Fichte Vollholz:: 100: 20 g/m² IVa, b, c oder d/150: 105 g/m² IVa, b, c oder d
- Bangkirei:: 100: 5 g/m² IVa, b, c oder d//50: 2,5 g/m² IVa, b, c oder d

### Beispiel 4C: Produktschutz Holz mit aufgelegtem Käse (Provokationstest)

**Produkt PSM V - Oberflächenbehandlung von Holz**

| | Unbehandelt | Behandelt Schimmelpilzwachstum | | | | | | Luftfeuchtigkeit/ Temperatur |
|---|---|---|---|---|---|---|---|---|
| | | PSM V a 100 | a 50 | b 100 | b50 | c 100 | c 50 | |
| Fichte Leimholz | X⁸ | - | X²⁰ | - | X¹⁰ | - | X¹⁴ | 85 %/15 °C |
| Fichte Vollholz | X¹¹ | - | X²⁰ | - | X¹⁰ | - | X¹⁴ | 85 %/15 °C |
| Bangkirei | X¹¹ | - | X²⁰ | - | X¹⁰ | - | X¹⁴ | 85 %/15 °C |

| | | | | | | | | |
|---|---|---|---|---|---|---|---|---|
| * Tropenholz | | | | | | | | |
| X: Schimmelpilzwachstum positiv (Index gibt an, an welchem Tag Schimmelwachstum zwischen Käse und Brett auftrat); | | | | | | | | |
| -: Schimmelpilzwachstum negativ, bis zum 35. Tag nach Behandlung trat kein Schimmelwachstum auf. Danach wurde der Versuch abgebrochen (Ende der Käsereifung). | | | | | | | | |

### Dosierung PSM V:

- Fichte Leimholz: 100: 15 g/m² Va, b oder c//50: 7,5 g/m² Va, b oder c
- Fichte Vollholz: 100: 20 g/m² Va, b oder c//50: 10 g/m² Va, b oder c
- Bangkirei: 100: 5 g/m² Va, b oder c//50: 2,5 g/m² Va, b oder c

### Beispiel 5: Verhinderung des Schimmelwachstums durch Coating am Beispiel Käsereifung

- Anwendung:: Vorlage im Käsedeckmittel
- Lebensmittelprodukt:: Schnittkäse
- Problematik:: Schimmelwachstum während der Käsereifung
- Dosierung:: 2 % Gew. ad Coating (PSM I)
- Probenzahl:: jeweils 10 x 30 g O-Proben und -Proben

### Durchführung:

Simulation in einem Klimaraum für Käsereifung
Temperatur: 15 °C, rel. Luftfeuchtigkeit: ca. 75 %
Behandlung von jeweils 8 Rohkäsen mit neutralem sowie PSM-I-Coating
Die Käse werden täglich gewendet.
Ziel/Ergebnis: Verminderung des Schimmelwachstums gegenüber der O-Probe während der Reifung
Visuelle Kontrolle: Schimmel und Hefen auf der Käseoberfläche
Probeaufnahme: Visuelle Kontrolle auf äußerliche Beschaffenheit, täglich

### Auswertung

| | |
|---|---|
| Auslagerungsergebnisse im Klimaraum | K 43: 15 °C, 75 % rel. Feuchte |
| Einlagerung der Ziegenschnittkäse: | 15.07. aus dem Salzbad |
| Coating | am 28.07. der eine Seite |
| | am 29.08. der gegenüberliegenden Seite |

danach anschließend tägliches Wenden und Kontrollieren.

### Prüfung der Schimmelbealstung von K 34 mittels RCS-Gerät:

| | |
|---|---|
| am 21.07. | 210/m³ |
| am 24.07. | 65/m³ |

### Ergebnisse der Versuchsreihe: visuelle Kontrolle auf Schimmelpilzen

| Kontrolltag | n = 8, ohne PSM | n = 8, mit PSM |
|---|---|---|
| 09.08. | 1 | 0 |
| 10.08. | 4 | 0 |

| | | |
|---|---|---|
| n = Anzahl der Käse | | |

Kommentar: Die unbehandelten und behandelten Käse (PSM I im Coating) wurden unter den in den in einem Klimaraum möglichen Bedingungen (s. Prüfung Schimmelbelastung) gereift. Die Nullproben zeigten im Gegensatz zu den PSM-I-Proben ab dem 12. Reifetag visuell Schimmelwachstum.

**PSM I Oberflächenbehandlung - Standzeiten**

| | Filter | PSM-Sprühmittel | Dosierung | Schimmelpilze § 35 LMBG | Bakterien § 35 LMBG |
|---|---|---|---|---|---|
| F-0 | | 0-Probe | 0 | 8 x 10⁵/25 cm² | 10⁴/25 cm² |
| F-1 | | | 0,1 g/m² | 7 x 10³/25 cm² | 8 x 10¹/25 cm² |
| F-2 | | | 1 g/m² | 2 x 10²/25 cm² | < 10 |
| F-3 | | | 10 g/m² | < 10/25 cm² | < 10 |

## Patentansprüche

1. Verfahren zur Imprägnierung und zur Behandlung mikrobiell abbaubarer, kontaminierbarer und/oder verderblicher Substanzen/Gegenstände, wobei die Substanzen/Gegenstände ausgewählt sind aus Holz, Korbwaren, Textilien und textile Rohstoffe, Filter, Waschmittel und Reinigungsmittel, umfassend
- das Verteilen oder Auftragen einer antimikrobiellen Zusammensetzung auf der Oberfläche der abbaubaren, kontaminierbaren und/oder verderblichen vorgenannten Substanzen/Gegenstände und/oder
- das Einarbeiten der antimikrobiellen Zusammensetzung in die abbaubaren, kontaminierbaren und/oder verderblichen Substanzen/Gegenstände,
wobei die antimikrobielle Zusammensetzung wenigstens zwei GRAS(Generally Recognized As Safe)-Aromastoffe enthält.

2. Verfahren nach Anspruch 1, wobei die antimikrobielle Zusammensetzung wenigstens einen GRAS-Aroma-Alkohol (a), vorzugsweise einen aromatischen GRAS-Aroma-Alkohol und insbesondere Benzylalkohol, enthält.

3. Verfahren nach Anspruch 1, wobei die antimikrobielle Zusammensetzung wenigstens einen hydrophilen, alkoholischen GRAS-Aromastoff und/oder einen hydrophilen, nichtalkoholischen GRAS-Aromastoff enthält.

4. Verfahren nach Anspruch 3, wobei die antimikrobielle Zusammensetzung weiterhin Benzylalkohol und/oder eine Polyphenolverbindung (b) enthält.

5. Verfahren nach Anspruch 1, wobei die antimikrobielle Zusammensetzung einen oder mehrere GRAS-Aroma-Alkohole oder deren Derivate (a) und einen oder mehrere Aromastoffe, ausgewählt aus Polypenolverbindungen (b) und GRAS-Aromasäuren oder deren Derivate (c) enthält.

6. Verfahren nach Anspruch 5, wobei die antimikrobielle Zusammensetzung
(a1) einen aromatischen GRAS-Aroma-Alkohol, insbesondere Benzylalkohol als notwendigen Bestandteil und gegebenenfalls
(a2) einen oder mehrere weitere GRAS-Aroma-Alkohole oder deren Derivate und
(b) eine oder mehrere Polyphenolverbindungen und/oder
(c) eine oder mehrere GRAS-Säuren oder deren Derivate
enthält, wobei die antimikrobielle Zusammensetzung insbesondere
0,1 bis 99 Gew.-%, vorzugsweise 0,1 bis 75 Gew.-% Benzylakohol und
0,01 bis 99,8 Gew.-%, vorzugsweise 0,01 bis 99 Gew.-% Komponente (a2);
0,01 bis 25 Gew.-%, vorzugsweise 0,01 bis 10 Gew.-% Komponente (b); und/oder
0,01 bis 70 Gew.-%, vorzugsweise 0,01 bis 30 Gew.-% Komponente (c)
enthält.

7. Verfahren nach Anspruch 6, wobei die antimikrobielle Zusammensetzung
(i) eine oder mehrere Polyphenolverbindungen (b) als notwendigen Bestandteil und gegebenenfalls eine oder mehrere GRAS-Säuren (c) oder deren Derivate enthält und/oder
(ii) noch weitere GRAS-Aromastoffe, ausgewählt aus (d) Phenolen, (e) Estern, (f) Terpenen, (g) Acetalen, (h) Aldehyden und (i) etherischen Ölen und insbesondere 0,001 bis 25 Gew.-%, vorzugsweise 0,01 bis 9 Gew.-%, der weiteren GRAS-Aromastoffe (d) bis (i) enthält.

8. Verfahren nach Anspruch 6 oder 7, wobei die antimikrobielle Zusammensetzung ein oder zwei GRAS-Aroma-Alkohole (a2) und wenigstens eine Polyphenolverbindung (b) enthält, wobei die Polyphenolverbindung (b) vorzugsweise Tannin ist, und wobei die antimikrobielle Zusammensetzung besonders bevorzugt 0,1 bis 98 Gew.-% Benzylalkohol und 0,01 bis 10 Gew.-% Tannin enthält.

9. Verfahren nach Anspruch 1, wobei die antimikrobielle Zusammensetzung
(i) wenigstens einen lipophilen GRAS(Generally Recognized As Safe)-Aromastoff und
(ii) wenigstens einen hydrophilen GRAS-Aromastoff
enthält, wobei vorzugsweise der hydrophile GRAS-Aromastoff ein hydrophiler, alkoholischer GRAS-Aromastoff (aₕ) oder ein hydrophiler, nichtalkoholischer GRAS-Aromastoff ist, wobei der hydrophile, alkoholische GRAS-Aromastoff (aₕ) vorzugsweise ein einwertiger oder mehrwertiger Alkohol mit 2 bis 10, besonders bevorzugt mit 2 bis 7 C-Atomen ist, der insbesondere ausgewählt ist aus Acetoin, Ethylalkohol, Propylalkohol, iso-Propylalkohol, Propylenglykol und Glycerin,
der hydrophile, nichtalkoholische GRAS-Aromastoff eine hydrophile organische GRAS-Aromasäure (cₕ) mit 1 bis 15 C-Atomen oder ein physiologisches Salz derselben, ein hydrophiles Acetat (eₕ) oder ein hydrophiler Aldehyd (hₕ) ist.

10. Verfahren nach Anspruch 9, wobei die antimikrobielle Zusammensetzung
(i) zwei lipophile GRAS-Aroma-Alkohole (aₗ), jedoch kein Benzylalkohol und keine Polyphenolverbindungen (b) oder
(ii) Benzylalkohol und/oder eine Polyphenolverbindung (b), jedoch keine weiteren GRAS-Aroma-Alkohole
enthält.

11. Verfahren nach einem oder mehreren der Ansprüche 1 bis 10, wobei die antimikrobielle Zusammensetzung
(i) weiterhin ein oder mehrwertige Alkohole mit 2 bis 10 C-Atomen, Emulgatoren, Stabilisatoren, Antioxidantien, Konservierungsmittel, Lösemittel und/oder Trägerstoffe enthält und/oder
(ii) ausschließlich aus GRAS-Aromastoffen besteht.

12. Verfahren nach einem oder mehreren der Ansprüche 1 bis 11, wobei die mikrobiologisch abbaubaren und/oder verderblichen Substanzen/Gegenstände ausgewählt sind aus Luftfiltern, Wolle und Baumwolle.

13. Verwendung einer antimikrobiellen Zusammensetzung, wie in den Ansprüchen 1 bis 11 definiert, zur Imprägnierung oder Oberflächenbehandlung von mikrobiologisch abbaubaren, kontaminierbaren und/oder verderblichen Substanzen/Gegenständen oder von Substanzen/Gegenständen, die selbstdekontaminierend sein müssen, wobei die Substanzen/Gegenstände wie in Anspruch 1 definiert sind.

14. Verwendung einer antimikrobiellen Zusammensetzung, wie in den Ansprüchen 1 bis 11 definiert, zum Einarbeiten in mikrobiologisch abbaubare, kontaminierbare und/oder verderbliche Substanzen/Gegenstände oder in Substanzen/Gegenständen, die selbstdekontaminierend sein müssen, wobei die Substanzen/Gegenstände wie in Anspruch 1 definiert sind.

## Claims

1. A method for the impregnation and treatment of microbially degradable, contaminatable and/or perishable substances/objects, wherein said substances/objects are selected from wood/timber, basketry, textiles and textile raw materials, filters, detergents and cleaning agents; comprising
- the distribution or application of an antimicrobial composition to the surface of the above-mentioned degradable, contaminatable and/or perishable substances/objects; and/or
- the incorporation of said antimicrobial composition into said degradable, contaminatable and/or perishable substances/objects;
said antimicrobial composition containing at least two GRAS (generally recognized as safe) flavoring agents.

2. The method according to claim 1, wherein said antimicrobial composition contains at least one GRAS flavor alcohol (a), preferably an aromatic GRAS flavor alcohol, especially benzyl alcohol.

3. The method according to claim 1, wherein said antimicrobial composition contains at least one hydrophilic alcoholic GRAS flavoring agent and/or one hydrophilic non-alcoholic GRAS flavoring agent.

4. The method according to claim 3, wherein said antimicrobial composition further contains benzyl alcohol and/or a polyphenol compound (b).

5. The method according to claim 1, wherein said antimicrobial composition contains one or more GRAS flavor alcohols or their derivatives (a) and one or more flavoring agents selected from polyphenol compounds (b) and GRAS flavor acids or their derivatives (c).

6. The method according to claim 5 wherein said antimicrobial composition contains
(a1) an aromatic GRAS flavor alcohol, especially benzyl alcohol, as a necessary component; and optionally
(a2) one or more further GRAS flavor alcohols or their derivatives; and
(b) one or more polyphenol compounds; and/or
(c) one or more GRAS acids or their derivatives;
wherein said antimicrobial composition contains, in particular,
from 0.1 to 99% by weight, preferably from 0.1 to 75% by weight, of benzyl alcohol; and
from 0.01 to 99.8% by weight, preferably from 0.01 to 99% by weight, of component (a2);
from 0.01 to 25% by weight, preferably from 0.01 to 10% by weight, of component (b); and/or
from 0.01 to 70% by weight, preferably from 0.01 to 30% by weight, of component (c).

7. The method according to claim 6, wherein said antimicrobial composition contains:
(i) one or more polyphenol compounds (b) as a necessary component and optionally one or more GRAS acids (c) or their derivatives; and/or
(ii) further GRAS flavoring agents selected from (d) phenols, (e) esters, (f) terpenes, (g) acetals, (h) aldehydes and (i) essential oils, especially from 0.001 to 25% by weight, preferably from 0.01 to 9% by weight, of said further GRAS flavoring agents (d) to (i).

8. The method according to claim 6 or 7, wherein said antimicrobial composition contains one or two GRAS flavor alcohols (a2) and at least one polyphenol compound (b), wherein said polyphenol compound (b) is preferably tannin, and wherein said antimicrobial composition contains more preferably from 0.1 to 98% by weight of benzyl alcohol and from 0.01 to 10% by weight of tannin.

9. The method according to claim 1, wherein said antimicrobial composition contains
(i) at least one lipophilic GRAS (generally recognized as safe) flavoring agent; and
(ii) at least one hydrophilic GRAS flavoring agent;
wherein said hydrophilic GRAS flavoring agent is preferably a hydrophilic alcoholic GRAS flavoring agent (aₕ) or a hydrophilic non-alcoholic GRAS flavoring agent, wherein said hydrophilic alcoholic GRAS flavoring agent (aₕ) is preferably a monohydric or polyhydric alcohol having from 2 to 10, more preferably from 2 to 7, carbon atoms, which is especially selected from acetoin, ethyl alcohol, propyl alcohol, iso-propyl alcohol, propylene glycol and glycerol; and
said hydrophilic non-alcoholic GRAS flavoring agent is a hydrophilic organic GRAS flavor acid (cₕ) having from 1 to 15 carbon atoms or a physiological salt thereof, a hydrophilic acetate (eₕ) or a hydrophilic aldehyde (hₕ).

10. The method according to claim 9, wherein said antimicrobial composition contains:
(i) two lipophilic GRAS flavor alcohols (aₗ), but no benzyl alcohol and no polyphenol compounds (b); or
(ii) benzyl alcohol and/or a polyphenol compound (b), but no further GRAS flavor alcohols.

11. The method according to one or more of claims 1 to 10, wherein said antimicrobial composition
(i) further contains monohydric or polyhydric alcohols having from 2 to 10 carbon atoms, emulsifiers, stabilizers, antioxidants, preservatives , solvents and/or carriers; and/or
(ii) exclusively consists of GRAS flavoring agents.

12. The method according to one or more of claims 1 to 11, wherein said microbially degradable and/or perishable substances/objects are selected from air filters, wool and cotton.

13. Use of an antimicrobial composition as defined in claims 1 to 11 for the impregnation or surface treatment of microbially degradable, contaminatable and/or perishable substances/objects or of substances/objects which have to be self-decontaminating, wherein said substances/objects are as defined in claim 1.

14. Use of an antimicrobial composition as defined in claims 1 to 11, for incorporation into microbiologically degradable, contaminatable and/or perishable substances/objects, or into substances/objects which have to be self-decontaminating, wherein said substances/objects are as defined in claim 1.

## Revendications

1. Procédé d'imprégnation et de traitement de substances/objets dégradables, contaminables et/ou périssables par voie microbienne, dans lequel les substances/objets sont choisis parmi le bois, l'osier, les textiles et les matières premières textiles, les filtres, les détergents et les produits de nettoyage, comprenant
la répartition ou l'application d'une composition antimicrobienne sur la surface des substances/objets dégradables, contaminables et/ou périssables précités, et/ou
l'incorporation de la composition antimicrobienne dans les substances/objets dégradables, contaminables et/ou périssables,
la composition antimicrobienne contenant au moins deux substances aromatisées GRAS (*Generally Recognized As Safe*: généralement reconnues inoffensives).

2. Procédé selon la revendication 1, dans lequel la composition antimierabienne contient au moins un arôme-alcool GRAS (a), de préférence un arôme-alcool GRAS aromatique et en particulier de l'alcool benzylique.

3. Procédé selon la revendication 1, dans lequel la composition antimicrobienne contient au moins une substance aromatisée GRAS alcoolique, hydrophile et/ou une substance aromatisée GRAS non alcoolique, hydrophile.

4. Procédé selon la revetldication 3, dans lequel la composition antimicrobienne contient en outre de l'alcool benzylique et/ou un polyphénol (b).

5. Procédé selon la revendication 1, dans lequel la composition antimicrobienne contient un ou plusieurs arômes-alcools GRAS ou leurs dérivés (a), et une ou plusieurs substances aromatisées choisies parmi les polyphénols (b) et les arômes-acides GRAS ou leurs dérivés (c).

6. Procédé selon la revendication 5, dans lequel la composition antimicrobienne contient
(a1) un arôme-alcool GRAS aromatique, en particulier l'alcool benzylique comme constituant essentiel et, le cas échéant,
(a2) un ou plusieurs autres arômes-alcools GRAS ou leurs dérivés, et
(b) un ou plusieurs polyphénols et/ou
(c) un ou plusieurs acides GRAS ou leurs dérivés,
la composition antimicrobienne contenant en particulier
0,1 à 99 % en poids, de préférence 0,1 à 75 % en poids, d'alcool benzylique et
0,01 à 99,8 % en poids, de préférence 0,01 à 99 % en poids du composé (a2) ;
0,01 à 25 % en poids, de préférence 0,01 à 10 % en poids, du composé (b) ; et/ou
0,01 à 70 % en poids, de préférence 0,01 à 30 % en poids, du composé (c).

7. Procédé selon la revendication 6, dans lequel la composition antimicrobienne contient
(i) un ou plusieurs polyphénols (b) comme constituant essentiel et, le cas échéant, un ou plusieurs acides GRAS (c) ou leurs dérivés, et/ou
(ii) encore d'autres substances aromatisées GRAS choisies parmi (d) les phénols, (e) les esters, (f) les terpènes, (g) les acétals, (h) les aldéhydes et (i) les huiles éthérées et, en particulier, de 0,001 à 25 % en poids, de préférence de 0,01 à 9 % en poids, d'autres substances aromatisées GRAS (d) à (i).

8. Procédé selon la revendication 6 ou 7, dans lequel la composition antimicrobienne contient un ou deux arômes-alcools GRAS (a2) et au moins un polyphénol (b), dans lequel le polyphénol (b) est de préférence un tanin, et dans lequel la composition antimicrobienne contient, de façon particulièrement préférée, 0,1 à 98 % en poids d'alcool benzylique et 0,01 à 10 % en poids de tanin.

9. Procédé selon la revendication 1, dans lequel la composition antimicrobienne contient
(i) au moins une substance aromatisée GRAS lipophile et
(ii) au moins une substance aromatisée GRAS hydrophile,
dans lequel la substance aromatisée GRAS hydrophile est de préférence une substance aromatisée GRAS hydrophile alcoolique (aₕ) ou une substance aromatisée GRAS hydrophile non alcoolique, la substance aromatisée GRAS hydrophile alcoolique (aₕ) étant de préférence un alcool monovalent ou polyvalent ayant 2 à 10, de façon particulièrement préférée, 2 à 7 atomes de C, qui est en particulier choisi parmi l'acétoîne, l'alcool éthylique, l'alcool propylique, l'alcool iso-propylique, le propylène glycol et le glycérol,
la substance aromatisée GRAS hydrophile non alcoolique étant un arôme-acide GRAS hydrophile organique (cₕ) ayant de 1 à 15 atomes de C ou un sel physiologique de ce dernier, un acétate hydrophile (eₕ) ou un aldéhyde hydrophile (hₕ).

10. Procédé selon la revendication 9, dans lequel la composition antimicrobienne contient
(i) deux arômes-alcools GRAS lipophiles (aₗ), mais pas d'alcool benzylique ni de polyphénols (b) ou
(ii) de l'alcool benzylique et/ou un polyphénol (b), mais pas d'autre arôme-alcool GRAS.

11. Procédé selon l'une ou plusieurs des revendications 1 à 10, dans lequel la composition antimicrobienne
(i) contient en outre un ou plusieurs alcools mono- ou polyvalents ayant 2 à 10 atomes de C, émulsifiants, stabilisants, antioxydants, conservateurs, solvants et/ou matériaux de support et/ou
(ii) est constituée exclusivement de substances aromatisées GRAS.

12. Procédé selon l'une ou plusieurs des revendications 1 à 11, dans lequel les substances/objets microbiologiquement dégradables et/ou périssables sont choisis parmi les filtres à air, la laine et le coton.

13. Utilisation d'une composition antimicrobienne, telle que définie dans les revendications 1 à 11, pour l'imprégnation ou le traitement de surface de substances/objets microbiologiquement dégradables, contaminables et/ou périssables, ou de substances/objets qui doivent être auto-décontaminants, les substances/objets étant tels que définis dans la revendication 1.

14. Utilisation d'une composition antimicrobienne, telle que définie dans les revendications 1 à 11, pour l'incorporation dans des substances/objets microbiologiquement dégradables, contaminables et/ou périssables ou dans des substances/objets qui doivent être auto-décontaminants, les substances/objets étant tels que définis dans la revendication 1.
